# EUROPÄISCHE PATENTSCHRIFT

(11) **EP 0 760 319 B1**
(45) Veröffentlichungstag und Bekanntmachung des Hinweises auf die Patenterteilung: **31.05.2000**
(21) Anmeldenummer: 96113957.3
(22) Anmeldetag: 30.08.1996
(51) Int. Cl.: B60T 13/52

(54) **Bremskraftverstärker/Hauptzylinder-Einheit mit Verbindungsbolzen**
Brake force booster and master cylinder unit with connection struts
Unité de servomoteur à dépression d'assistance au freinage et maître-cylindre avec axe de liaison

(30) Priorität: 01.09.1995 DE 29514063 U
(43) Veröffentlichungstag der Anmeldung: 05.03.1997
(73) Patentinhaber: Lucas Industries Limited, London W1Y 4DJ (GB)
(72) Erfinder: Kaub, Manfred, D-56321 Rhens (DE); Mallmann, Markus, D-56291 Pfalzfeld (DE); Equizabal, José Luis, D-56072 Koblenz (DE); Puscher, Gerd, D-56626 Andernach (DE); Sternal, Norbert, D-56127 Bonn (DE); Zeuner, Lothar, D-57518 Steineroth (DE)
(74) Vertreter: Beyer, Andreas, Dr.

(56) Entgegenhaltungen:
- DE-A- 2 845 794

## Beschreibung

Die Erfindung betrifft eine Bremskraftverstärker/Hauptzylinder-Einheit gemäß dem Oberbegriff des Anspruchs 1.

Bremskraftverstärker/Hauptzylinder-Einheiten dieser Art, die beispielsweise in der DE 28 45 794 C3 ausführlich beschrieben sind, haben sich millionenfach bewährt. Üblicherweise sind sie im Motorraum eines Kraftfahrzeugs an einer den Fahrgastraum nach vorne abgrenzenden, Spritzwand genannten Karosseriewand befestigt. Ein mit der Fahrzeugpedalerie, zumindest aber mit dem Bremspedal verbundenes Eingangsglied des Bremskraftverstärkers überträgt eine vom Fahrer ausgeübte Betätigungskraft auf den Bremskraftverstärker, der diese Kraft verstärkt und über ein Ausgangsglied an einen nachgeschalteten, mit dem Bremskraftverstärker verbundenen Hauptzylinder weiterleitet.

Im Rahmen von Crashtests, die zur Verbesserung der in den letzten Jahren zunehmend mehr beachteten Aufprallsicherheit durchgeführt werden, ist festgestellt worden, daß sich bei schweren Frontalaufprallen die zumeist an einer gemeinsamen Konsole befestigten Fahrzeugpedale in den Innenraum des Fahrzeugs hinein verlagern und dabei häufig auch nach oben schwenken, was zu Fuß- und Beinverletzungen des Fahrzeuglenkers führen kann. Darüberhinaus kann das beschriebene Verhalten der Fahrzeugpedale bei einem schweren Frontalaufprall dazu führen, daß die Beine des Fahrzeuglenkers zwischen dem Armaturenbrett oder der Lenksäule und den Pedalen eingeklemmt werden, was die Bergung eines verletzten Fahrzeuglenkers sehr erschweren kann.

Zur weiteren Verbesserung der Frontalaufprallsicherheit von Kraftfahrzeugen wird nach Lösungen gesucht, die die bei einem Frontalaufprall eintretende Verkleinerung insbesondere des Fahrerfußraums möglichst gering halten und die ein nach oben Schwenken der Fußpedale bei einem Frontalaufprall vermeiden.

Der Erfindung liegt die Aufgabe zugrunde, eine solche Lösung anzugeben.

Diese Aufgabe ist erfindungsgemäß ausgehend von einer Bremskraftverstärker/Hauptzylinder-Einheit der eingangs genannten Art dadurch gelöst, daß das Hauptzylindergehäuse mit seiner Halterung sich nach Überschreiten einer vorher festgelegten, in Richtung der Hauptzylinderachse auf es wirkenden Druckkraft relativ zu dem oder den Verbindungsbolzen in das Bremskraftverstärkergehäuse hinein verschiebt. Im Unterschied zu Bremskraftverstärker/Hauptzylinder-Einheiten der eingangs genannten Art werden demnach Druckkräfte, die zumindest im wesentlichen in Richtung der Hauptzylinderachse auf das Hauptzylindergehäuse wirken, nicht über den oder die Verbindungsbolzen an die Karosseriewand weitergeleitet, an der die Bremskraftverstärker/Hauptzylinder-Einheit befestigt ist, denn das Hauptzylindergehäuse ist erfindungsgemäß in der Lage, sich relativ zu dem oder den Verbindungsbolzen und damit relativ zum Bremskraftverstärkergehäuse zu verschieben. Auf diese Weise können Kräfte, die beispielsweise bei einem schweren Frontalaufprall durch eine Verschiebung anderer im Motorraum befindlicher Bauteile auf den Hauptzylinder einwirken, von der Karosseriewand ferngehalten werden, womit einer den Fußraum verkleinernden Verformung der Karosseriewand entgegengewirkt wird. Der Wert der vorher festgelegten Druckkraft ist so gewählt, die genannte Verschiebung erst oberhalb der im normalen Betrieb beispielsweise durch Unterdruck im Bremskraftverstärkergehäuse auftretenden Kräfte stattfinden kann.

Bevorzugt ist bei einer erfindungsgemäßen Bremskraftverstärker/Hauptzylinder-Einheit die vorher festgelegte Druckkraft so bemessen, daß die Verschiebung des Hauptzylindergehäuses eintritt, bevor sich die Karosseriewand aufgrund einer längs der Hauptzylinderachse wirkenden Druckkraft verformen würde. Auf diese Weise ist sichergestellt, daß gegen den Hauptzylinder drückenden Bauteilen zunächst mehr Verschiebeweg bereitgestellt wird, ohne daß die Karosseriewand in Mitleidenschaft gezogen wird.

Die erfindungsgemäße Lösung ist sowohl bei einstufigen Bremskraftverstärkern, die nur eine bewegliche Wand aufweisen, als auch bei zweistufigen sog. Tandem-Bremskraftverstärkern anwendbar, die zwei axial hintereinander angeordnete bewegliche Wände besitzen. Desweiteren eignet sich die erfindungsgemäße Lösung nicht nur zur Anwendung bei UnterdruckBremskraftverstärkern, sondern auch bei Druckluft-Bremskraftverstärkern, bei denen im Bremskraftverstärkergehäuse ein gegenüber der Atmosphäre höherer Innendruck aufgebaut wird.

Bei manchen Ausführungsbeispielen der erfindungsgemäßen Bremskraftverstärker/Hauptzylinder-Einheit ist die Halterung des Hauptzylindergehäuses durch einen mit letzterem verbundenen, radialen Flansch gebildet, der innerhalb des Bremskraftverstärkergehäuses angeordnet ist. Der radial nach außen vorspringende Flansch, der auch einstückig mit dem Hauptzylindergehäuse ausgebildet sein kann, hat einen größeren Durchmesser als der Rest des Hauptzylindergehäuses und liegt bevorzugt innen an der dem Hauptzylinder benachbarten äußeren Gehäusewand des Bremskraftverstärkergehäuses an. So kann sich die äußere Gehäusewand des Bremskraftverstärkergehäuses bei Unterdruck im Inneren des Bremskraftverstärkers großflächiger abstützen, was es ermöglicht, diese Gehäusewand dünner und damit gewichtssparend auszuführen.

Mit Vorteil weist die dem Hauptzylinder benachbarte äußere Gehäusewand des Bremskraftverstärkergehäuses einen insbesondere axial nach außen hervorragenden, stutzenförmigen Abschnitt auf, der einen dem Bremskraftverstärkergehäuse benachbarten Befestigungsflansch des Hauptzylindergehäuses in Umfangsrichtung umfaßt. Der stutzenförmige Abschnitt dient als zusätzliche Führung für das Hauptzylindergehäuse und vereinfacht den Zusammenbau der erfindungsgemäßen Bremskraftverstärker/Hauptzylinder-Einheit. Bevorzugt wird der stutzenförmige Abschnitt des Bremskraftverstärkergehäuses auch zur Abdichtung gegenüber dem Hauptzylindergehäuse herangezogen. Hierzu ist in der Mantelfläche des Befestigungsflansches des Hauptzylindergehäuses beispielsweise eine Nut mit einer darin eingelegten Ringdichtung vorhanden, die an der Innenseite des stutzenförmigen Abschnitts des Bremskraftverstärkergehäuses anliegt und letzteres so nach außen abdichtet. Bei einigen Ausführungsformen der erfindungsgemäßen Bremskraftverstärker/Hauptzylinder-Einheit ist der von dem stutzenförmigen Abschnitt umgebene Befestigungsflansch des Hauptzylindergehäuses zylindrisch, während er bei anderen Ausführungsformen in Draufsicht gesehen im wesentlichen rautenförmig ist. Die letztgenannten Ausführungsformen haben den Vorteil, daß der oder die Verbindungsbolzen, die sich je durch die Halterung des Hauptzylindergehäuses, jedoch nicht durch den Befestigungsflansch erstrecken, näher an der Hauptzylinderachse plaziert werden können, die zugleich meist auch die Mittelachse des Bremskraftverstärkergehäuses ist.

Bei einigen Ausführungsbeispielen der erfindungsgemäßen Bremskraftverstärker/Hauptzylinder-Einheit wird der Wert der vorher festgelegten Druckkraft durch eine im Bremskraftverstärkergehäuse angeordnete und die bewegliche Wand in ihre Ausgangslage vorspannende Rückstellfeder bestimmt, deren eines Ende sich am Hauptzylindergehäuse oder dessen Halterung abstützt. Das andere Ende der Rückstellfeder stützt sich dann beispielsweise am Gehäuse eines Steuerventils ab, das in üblicher Weise die Zufuhr von Luft zu einer Arbeitskammer des Bremskraftverstärkers in Abhängigkeit einer am Eingangsglied wirksamen Kraft steuert. Bei diesen Ausführungsbeispielen wird das Hauptzylindergehäuse bzw. dessen Halterung nur durch die Federkraft der Rückstellfeder in Anlage mit der entsprechenden äußeren Gehäusewand des Bremskraftverstärkergehäuses gehalten. Die Kraft der Rückstellfeder ist dabei größer als die im normalen Betrieb der Einheit auftretenden und in Richtung einer Verschiebung des Hauptzylinders nach innen wirkenden, beispielsweise durch Unterdruck hervorgerufenen Kräfte, so daß eine Verschiebung des Hauptzylindergehäuses im normalen Betrieb unterbunden ist. Alternativ können jedoch auch andere Mittel vorhanden sein, die bewirken, daß das Hauptzylindergehäuse sich erst nach Überschreiten einer bestimmten Druckkraft relativ zum Bremskraftverstärkergehäuse bzw. dem oder den Verbindungsbolzen nach innen verschiebt. Solche Mittel können z.B. mechanische Anschläge sein, die bei einer vorbestimmten Kraft wegbrechen. Entsprechende Ausgestaltungen sind in den Unteransprüchen angegeben und in der Figurenbeschreibung näher erläutert.

Bei manchen Ausführungsformen der erfindungsgemäßen Bremskraftverstärker/Hauptzylinder-Einheit sind der oder die Verbindungsbolzen bevorzugt so ausgeführt, daß sie in dem Längsabschnitt, mit dem sie die Halterung des Hauptzylindergehäuses durchsetzen, einen vergrößerten Durchmesser aufweisen. Die entsprechenden Bohrungen in der Halterung können dabei so bemessen sein, daß die Abschnitte der Verbindungsbolzen mit vergrößertem Durchmesser nahezu spielfrei, jedoch nicht klemmend darin aufgenommen sind, ebenso können die genannten Abschnitte der Verbindungsbolzen aber mit Preßsitz in den Bohrungen der Halterungen aufgenommen sein. Bei der zuletzt genannten Alternative stellt der Preßsitz das Mittel dar, das nach Überschreiten der vorbestimmten Kraft das Hauptzylindergehäuse zur Verschiebung freigibt, d.h. die Stärke des Preßsitzes bzw. der Preßsitze bestimmt die Kraft, nach deren Überschreiten eine Verschiebung des Hauptzylindergehäuses und seiner Halterung relativ zu den Verbindungsbolzen erfolgen kann. Kommt es durch Überschreiten der vorher festgelegten Druckkraft zu einer Verschiebung des Hauptzylindergehäuses einschließlich seiner Halterung in das Bremskraftverstärkergehäuse hinein, so rutscht die Halterung nach kurzem Verschiebeweg von den Abschnitten vergrößerten Durchmessers herunter und ermöglicht durch das nun gegebene größere radiale Spiel eine gewisse Abwinkelung des Hauptzylindergehäuses gegenüber der Mittelachse des Bremskraftverstärkers, wodurch am Hauptzylinder angreifende Druckkräfte noch besser abgefangen werden können. Darüberhinaus kann so auf die Abschnitte verringerten Durchmessers der Verbindungsbolzen eine verstärkte Querkraftkomponente einwirken, die in durchaus erwünschter Weise ein Ausknicken des bzw. der Verbindungsbolzen und damit eine weitere Energieaufnahme bewirkt.

Bei allen Ausführungsformen können der oder die Verbindungsbolzen hohl sein, um Gewicht zu sparen oder um die Möglichkeit zu schaffen, Bauteile, wie beispielsweise eine elektrische Leitung im Innern des Verbindungsbolzens unterzubringen. Durch geeignete Wahl der Wanddicke eines hohlen Verbindungsbolzens kann dessen Neigung, in Querrichtung auszuknicken, unterstützt werden, wobei dennoch eine völlig ausreichende Stabilität gegenüber den im Normalbetrieb ausschließlich axial wirkenden Kräften gewährleistet ist.

Insbesondere dann, wenn mehrere Verbindungsbolzen vorgesehen sind, ist bevorzugt jeder von ihnen bezüglich der zur beweglichen Wand normalen Mittelachse des Bremskraftverstärkergehäuses seitlich versetzt angeordnet. Vorzugsweise sind dabei die mehreren Verbindungsbolzen in gleichen Abständen voneinander um die Mittelachse des Bremskraftverstärkergehäuses verteilt angeordnet. Bei einer besonders bevorzugten Ausführungsform der erfindungsgemäßen Bremskraftverstärker/Hauptzylinder-Einheit sind insgesamt zwei Verbindungsbolzen vorhanden und bezüglich der Mittelachse des Bremskraftverstärkergehäuses einander diametral gegenüber angeordnet.

Zweckmäßigerweise ragt bei allen Ausführungsformen der erfindungsgemäßen Bremskraftverstärkers/Hauptzylinder-Einheit zumindest ein Ende des bzw. jedes Verbindungsbolzens durch die entsprechende äußere Gehäusewand nach außen, um mit einem außerhalb des Gehäuses angeordneten Bauteil verbindbar zu sein. Üblicherweise ist im Einbauzustand das dem Fahrgastraum des Kraftfahrzeugs zugewandte Ende des bzw. jedes Verbindungsbolzens an der Spritzwand der Karosserie befestigt, während das gegenüberliegende Ende des bzw. jedes Verbindungsbolzens am Hauptzylinder befestigt ist. Dabei brauchen die äußeren Gehäusewände des Bremskraftverstärkergehäuses nicht an dem oder den Verbindungsbolzen befestigt, sondern nur daran abgestützt zu sein. Bei bevorzugten Ausführungsbeispielen des erfindungsgemäßen Bremskraftverstärkers sind die nach außen ragenden Enden des bzw. jedes Verbindungsbolzens mit Gewinden versehen, die zur Befestigung an einer Karosseriewand vorgesehen sind, während jeder Verbindungsbolzen eine Bohrung in der entsprechenden äußeren Gehäusewand durchsetzt. Der bzw. die Verbindungsbolzen übertragen bei einer solchen Anordnung sämtliche Axialkräfte, denen sonst das Bremskraftverstärkergehäuse ausgesetzt wäre.

Bevorzugte Ausführungsformen der erfindungsgemäßen Bremskraftverstärker/Hauptzylinder-Einheit sind so ausgestaltet, daß der bzw. jeder Verbindungsbolzen auf zumindest einem seiner Endbereiche eine radial nach außen vorspringende, vorzugsweise umlaufende Schulter aufweist. Eine solche Schulter stützt die zugeordnete äußere Bremskraftverstärkergehäusewand ab und verhindert so, daß letztere sich unter der Einwirkung eines Unterdruckes im Inneren des Bremskraftverstärkergehäuses nach innen wölbt.

Das Bremskraftverstärkergehäuse wird aus Gründen der einfacheren Fertigung im allgemeinen zumindest zweiteilig ausgeführt sein. Die Form des Bremskraftverstärkergehäuses ist nicht erfindungswesentlich, üblicherweise haben Bremskraftverstärker ein Gehäuse mit rundem Querschnitt, es sind jedoch auch Gehäuse mit ovalem, quadratischem oder rechteckigem Querschnitt ohne weiteres möglich.

Um die negativen Wirkungen einer Druckkrafteinwirkung auf den Hauptzylinder weiter zu mindern, ist in einer Ausführungsform der erfindungsgemäßen Bremskraftverstärker/Hauptzylinder-Einheit in dem Kraftübertragungsweg von dem Ausgangsglied des Bremskraftverstärkers, welches beispielsweise das Gehäuse des Steuerventils sein kann, zum Hauptzylinder ein Sollbruchstelle vorhanden, die bei einer längs der Hauptzylinderachse wirkenden Druckkraft bricht, bevor sich die Karosseriewand verformt. Beispielsweise ist ein Stößel, der die Kraft vom Steuergehäuse auf einen Primärkolben des Hauptzylinders überträgt, so ausgebildet, daß er bei Überschreiten einer bestimmten Druckkraft abschert. Dadurch kann sich das Hauptzylindergehäuse mit seiner Halterung ungehindert in das Bremskraftverstärkergehäuse hinein verschieben. Bei einem anderen Ausführungsbeispiel enthält der Hydraulikkreis des Hauptzylinders eine Überlastsicherung, die eine durch die Verschiebung des Hauptzylindergehäuses in das Bremskraftverstärkergehäuse mögliche, übermäßige Hydraulikdruckerhöhung abbaut bzw. begrenzt. Die Überlastsicherung kann beispielsweise ein Rückschlagventil sein, welches bei Erreichen eines bestimmten Wertes überschüssigen Hydraulikdruck z.B. in einen Hydraulikfluidvorratsbehälter abläßt. Auf diese Weise kann ausgeschlossen werden, daß der sich aufbauende Hydraulikdruck eine Höhe erreicht, die eine weitere und wünschenswerte Verschiebung des Hauptzylindergehäuses verhindert.

Mehrere Ausführungsbeispiele einer erfindungsgemäßen Bremskraftverstärker/Hauptzylinder-Einheit werden im folgenden anhand der beigefügten Figuren näher erläutert. Es zeigt:
- Fig. 1: den Längsschnitt durch ein erstes Ausführungsbeispiel einer erfindungsgemäßen Bremskraftverstärker/Hauptzylinder-Einheit im eingebauten Zustand,
- Fig. 2: die Ansicht aus Fig.1, nachdem eine Druckkraft längs einer Achse A von außen auf den Hauptzylinder eingewirkt hat,
- Fig. 3: die Ansicht III-III aus Fig.1,
- Fig. 4: eine der Ansicht aus Fig.3 entsprechende Ansicht eines zweiten Ausführungsbeispiels einer erfindungsgemäßen Bremskraftverstärker/Hauptzylinder-Einheit,
- Fig. 5: ein Detail des zweiten Ausführungsbeispieles in vergrößerter, räumlicher Darstellung,
- Fig.6: ein drittes Ausführungsbeispiel einer erfindungsgemäßen Bremskraftverstärker/Hauptzylinder-Einheit, wobei die entscheidenden Details in vergrößerter undteilweise geschnittener Ansicht dargestellt sind,
- Fig.7: schematisch die entscheidenden Details eines viertenAusführungsbeispiels einer erfindungsgemäßen Brems-kraftverstärker/Hauptzylinder-Einheit im Schnitt,
- Fig.8: die Ansicht VIII-VIII aus Fig.7, und
- Fig.9: eine der Fig.6 ähnliche Darstellung eines fünften Ausführungsbeispiels einer erfindungsgemäßen Bremskraftverstärker/Hauptzylinder-Einheit.

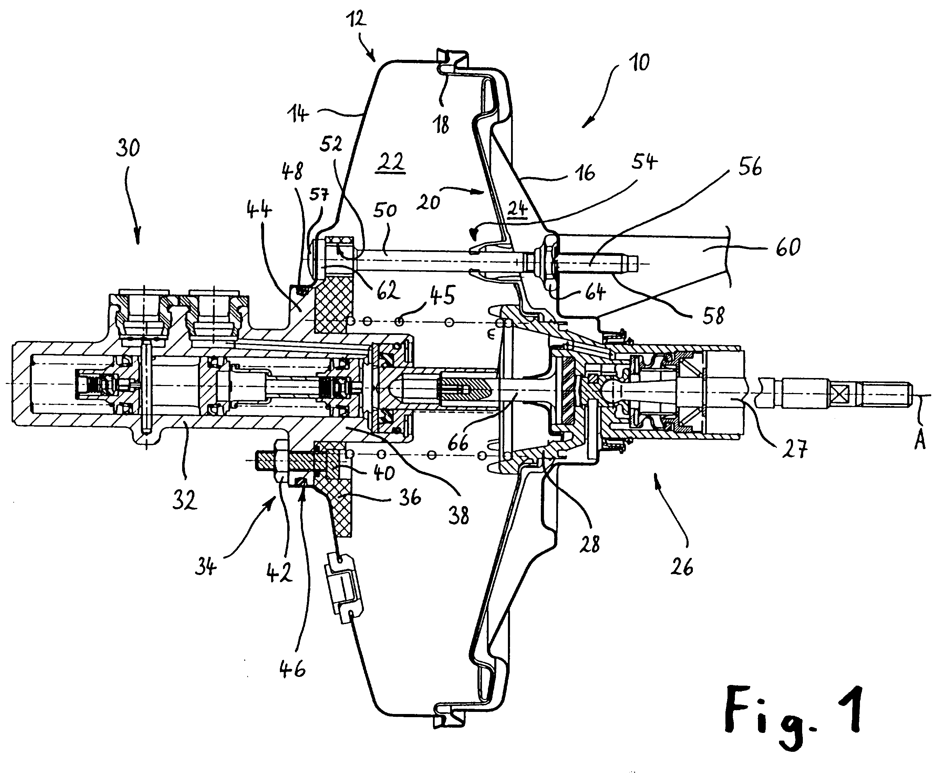

Ein in Fig. 1 dargestelltes, erstes Ausführungsbeispiel einer Bremskraftverstärker/Hauptzylinder-Einheit hat einen Bremskraftverstärker 10 mit einem Gehäuse 12, welches zwei schalenförmige, äußere Gehäusewände 14 und 16 aufweist. Zwischen den äußeren Rändern der Gehäusewände 14 und 16 ist der Außenrand einer elastischen Membran 18 eingespannt, die ein Teil einer axial beweglichen Wand 20 bildet. Die bewegliche Wand 20 unterteilt den durch die Gehäusewände 14 und 16 begrenzten Innenraum des Bremskraftverstärkergehäuses 12 in eine Unterdruckkammer 22 und eine Arbeitskammer 24.

Zum Bremskraftverstärker 10 gehört ein Steuerventil 26, mit dem ein Eingangsglied 27 in Eingriff steht, das seinerseits mit dem nicht gezeigten Fahrzeugbremspedal in Verbindung steht. Das Steuerventil 26 steuert in Abhängigkeit einer über das Eingangsglied eingeleiteten Betätigungskraft die Zufuhr von Atmosphärendruck in die Arbeitskammer 24. Die bewegliche Wand 20 verschiebt sich bei einer Betätigung des Bremskraftverstärkers 10 bezogen auf Fig.1 nach links und überträgt die verstärkte Betätigungskraft auf ein Ausgangsglied des Bremskraftverstärkers, hier das Gehäuse 28 des Steuerventils 26, welches die verstärkte Betätigungskraft in üblicher Weise an einen mit dem Bremskraftverstärker verbundenen Hauptzylinder 30 weiterleitet, der sich mit seinem Gehäuse 32 längs einer Achse A erstreckt.

Das Gehäuse 32 hat eine Halterung 34, die bei den in den Figuren 1 bis 5 gezeigten Ausführungsbeispielen durch einen sich radial nach außen erstreckenden Flansch 36 gebildet ist, der auf einem sich im Bremskraftverstärkergehäuse 12 befindenden Endabschnitt 38 des Hauptzylindergehäuses 32 angeordnet ist und der mit Schrauben 40 und Muttern 42 an einem Befestigungsflansch 44 des Hauptzylindergehäuses 32 befestigt ist. Der Befestigungsflansch 44, der sich bezogen auf das Bremskraftverstärkergehäuse 12 axial auswärts an den Endabschnitt 38 anschließt, ist einstückig mit dem Hauptzylindergehäuse 32 ausgebildet und hat einen gegenüber dem Endabschnitt 38 vergrößerten Durchmesser.

Wie aus Fig.1 hervorgeht, ist der Flansch 36, der auch einstückig mit dem Hauptzylindergehäuse 32 ausgeführt sein kann, innerhalb des Bremskraftverstärkergehäuses 12 angeordnet. Eine schraubenförmige Rückstellfeder 45 stützt sich mit ihrem einen Ende innen am Flansch 36 und mit ihrem gegenüberliegenden, anderen Ende am Gehäuse 28 des Steuerventils 30 ab, so daß der Flansch 36 mit dem radial äußeren Teil seiner in Fig.1 linken Stirnfläche an der Innenseite der Gehäuseaußenwand 14 anliegt und das gesamte Hauptzylindergehäuse 32 bezogen auf das Bremskraftverstärkergehäuse 12 axial auswärts vorgespannt ist. Die Kraft der Rückstellfeder 45 sorgt dafür, daß das Hauptzylindergehäuse 32 mit seinem Flansch 36 trotz der im Betrieb des Bremskraftverstärkers 10 wirkenden, durch Unterdruck in der Kammer 22 hervorgerufenen Kräfte seine in Fig.1 gezeigte Position beibehält. Ein radial der Achse A näherer Teil der Gehäusewand 14 ist als axial nach außen ragender, stutzenförmiger Abschnitt 46 ausgebildet und umgibt den Befestigungsflansch 44 des Hauptzylindergehäuses 32. Eine Ringdichtung 48 ist in einer Ringnut auf der Mantelfläche des Befestigungsflansches 44 zur Abdichtung des Hauptzylindergehäuses 32 gegen den stutzenförmigen Abschnitt 46 angeordnet. Die Funktion einer solchen Bremskraftverstärker/Hauptzylinder-Einheit im Rahmen von Bremsvorgängen ist Fachleuten wohlbekannt und wird deshalb hier nicht weiter erläutert.

Zur Kraftübertragung zwischen den beiden Gehäusewänden 14 und 16 des Bremskraftverstärkergehäuses 12 sind zwei Verbindungsbolzen 50 vorhanden, von denen in Fig.1 nur einer gezeigt ist, die parallel zur Achse A des Bremskraftverstärkers 10 und des Hauptzylinders 30 angeordnet sind. Jeder Verbindungsbolzen 50 durchsetzt von links gesehen die Gehäusewand 14, eine Bohrung 52 im Flansch 38, die bewegliche Wand 20 und schließlich die Gehäusewand 16. Die bewegliche Wand 20 ist gegenüber den Verbindungsbolzen 50 wie bei 54 dargestellt abgedichtet. Mit seinem in Fig.1 rechten Ende 56 ragt jeder der im gezeigten Ausführungsbeispiel einstückigen Verbindungsbolzen 50 aus dem Bremskraftverstärkergehäuse 12 heraus, während das linke Ende durch eine Schlag- bzw. Preßverformung zu einer Kappe 57 umgeformt ist. Auf dem Ende 56 ist ein Gewinde 58 ausgebildet, um die Bremskraftverstärker/Hauptzylinder-Einheit mittels einer nicht dargestellten Mutter an einer in Fig.1 nur angedeuteten Halterung 60 befestigen zu können, die ihrerseits an einer hier nicht dargestellten Karosseriewand des Fahrzeugs, meist der Spritzwand, befestigt ist und an der ein ebenfalls nicht dargestelltes Fahrzeugbremspedal angebracht ist.

Wie aus Fig.1 hervorgeht, weist jeder Verbindungsbolzen 50 in dem Bereich, d.h. auf der Länge, mit der er die Bohrung 52 im Flansch 36 durchsetzt, einen vergrößerten Außendurchmesser auf. Zwischen dem Abschnitt jedes Verbindungsbolzens 50 mit vergrößertem Durchmesser und der entsprechenden Bohrung 52 im Flansch 36 ist ein geringes Radialspiel vorhanden. Nahe seinem linken bzw. rechten Ende weist jeder Verbindungsbolzen 50 darüberhinaus je eine radial nach außen vorspringende und umlaufende Schulter 62 bzw. 64 auf. Die Schulter 64 ist im gezeigten Ausführungsbeispiel als auf das Gewinde 58 am rechten Ende 56 des Verbindungsbolzens 50 geschraubte Mutter ausgebildet, so daß der axiale Abstand zwischen den beiden Schultern 62 und 64 einstellbar ist. Die Gehäusewände 14 und 16 des Bremskraftverstärkergehäuses 12 stützen sich wie dargestellt axial einwärts gegen die Schultern 62 und 64 ab.

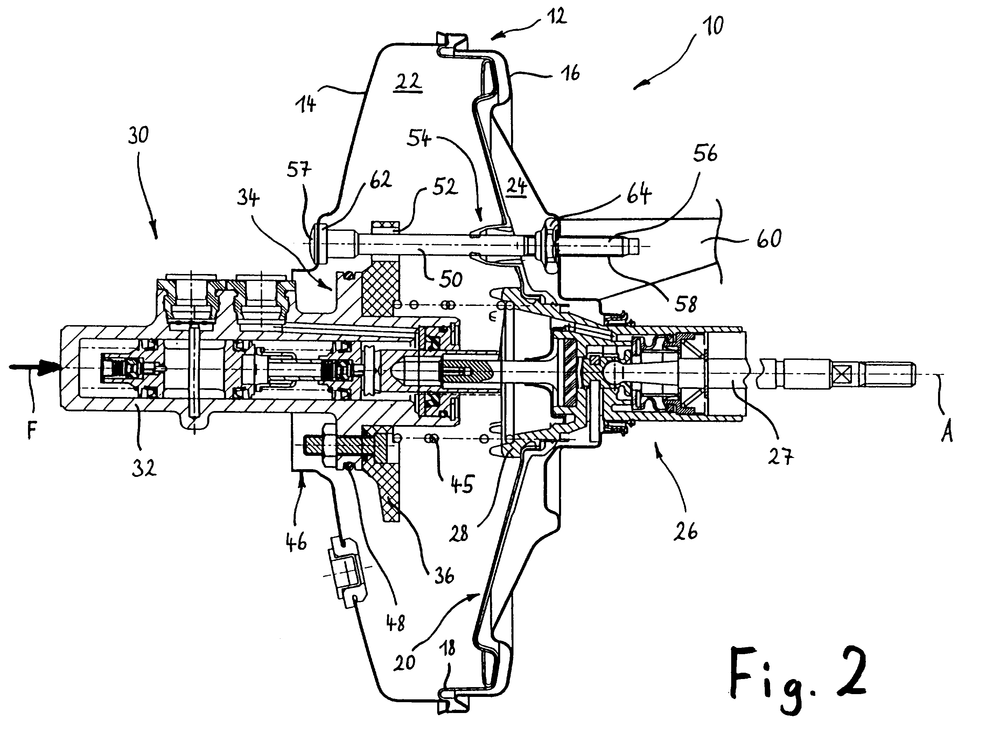

Die Funktion der bisher beschriebenen Bremskraftverstärker/Hauptzylinder-Einheit wird nun näher erläutert. Unter normalen Umständen nehmen der Hauptzylinder 30 und das Bremskraftverstärkergehäuse 12 die in Fig.1 wiedergegebene Stellung zueinander ein, in der die Halterung 34 des Hauptzylinders 30 durch die Rückstellfeder 45 gegen die Innenseite der Gehäusewand 14 gepreßt wird. Kommt es jedoch zu einer axial auf den Hauptzylinder 30 wirkenden Druckkraft F, wie es z.B. bei einem schweren Frontalaufprall des Kraftfahrzeugs geschieht, wenn andere im Motorraum des Fahrzeugs angeordnete Teile verschoben werden und insbesondere von vorne, d.h. in Fig.1 von links, gegen den Hauptzylinder 30 drücken, und überschreitet die Druckkraft F die entgegengerichtet wirkende Kraft der Rückstellfeder 45, so verschiebt sich das Hauptzylindergehäuse 32 mit seiner Halterung 34 wie in Fig.2 dargestellt nach rechts, d.h. in das Bremskraftverstärkergehäuse 12 hinein. Die genannte Verschiebung des Hauptzylindergehäuses 32 findet dabei relativ zu den Verbindungsbolzen 50 statt, indem sich der Flansch 36 auf den Verbindungsbolzen 50 verschiebt. Wie aus Fig.2 ersichtlich, rutscht dabei der Flansch 36 nach einer der Länge der Bohrung 52 entsprechenden axialen Verschiebung von dem Abschnitt vergrößerten Durchmessers des bzw. der Verbindungsbolzen 50 herunter. Aufgrund des damit gegebenen, größeren Radialspiels des Flansches 36 gegenüber dem bzw. den Verbindungsbolzen 50 kann das Hauptzylindergehäuse 32 sich verkanten, d.h. relativ zur Achse A schrägstellen, wodurch bei fortdauernder Druckkraft F Querkräfte auf die Verbindungsbolzen 50 ausgeübt werden, die zur Deformation bzw. zum Ausknicken der Verbindungsbolzen 50 in Querrichtung führen können. Dieses durchaus erwünschte Verhalten ermöglicht es zum einen, daß das Hauptzylindergehäuse 32 den auf es wirkenden Druckkräften besser ausweichen kann, und hat andererseits zur Folge, daß Druckkräfte, denen nicht ausgewichen werden kann, durch die Verformung des bzw. der Verbindungsbolzen 50 und der dadurch hervorgerufenen Deformation des Bremsverstärkergehäuse 12 zumindest teilweise absorbiert werden. Die unerwünschte Deformation der Karosseriewand, an der die Bremskraftverstärker/Hauptzylinder-Einheit befestigt ist, wird dadurch solange wie möglich vermieden.

Die beschriebene Verschiebung des Hauptzylindergehäuses 32 in das Bremskraftverstärkergehäuse 12 hinein führt auch dazu, daß die Ringdichtung 48 ihre abdichtende Wirkung gegenüber der Gehäusewand 14 nicht mehr erfüllen kann und Atmosphärendruck in die Unterdruckkammer 22 einströmt. Die bewegliche Wand 20 bewegt sich deshalb zurück in Richtung auf ihre in Fig.1 wiedergegebene Ausgangslage, wodurch die Verlagerung des Hauptzylindergehäuses 32 in das Bremskraftverstärkergehäuse 12 hinein erleichtert wird. Zur weiteren Erleichterung dieser Verschiebung bzw. zur Vergrößerung des möglichen Verschiebeweges kann im Kraftübertragungsweg zwischen dem Bremskraftverstärker 10 und dem Hauptzylinder 30 eine Sollbruchstelle vorhanden sein, die beim Überschreiten einer vorbestimmten Kraft den Kraftübertragungsweg unterbricht und dadurch Raum für eine weitere Verschiebung des Hauptzylindergehäuses 32 schafft. Beispielsweise kann ein in Fig.1 und Fig.2 dargestellter Stößel 66 eine Sollbruchstelle aufweisen. Alternativ und/oder zusätzlich kann auch der Hydraulikkreis des Hauptzylinders 30 eine Überlastsicherung beispielsweise in Form eines Überströmventils aufweisen, mittels derer ein sich im Verlaufe einer Verschiebung des Hauptzylindergehäuses 32 aufbauender, übermäßiger Hydraulikdruck abgebaut oder begrenzt werden kann. Auf diese Weise kann das Hauptzylindergehäuse 32 relativ zu den in ihm angeordneten Kolben weiter in das Bremskraftverstärkergehäuse 12 hinein verschoben werden.

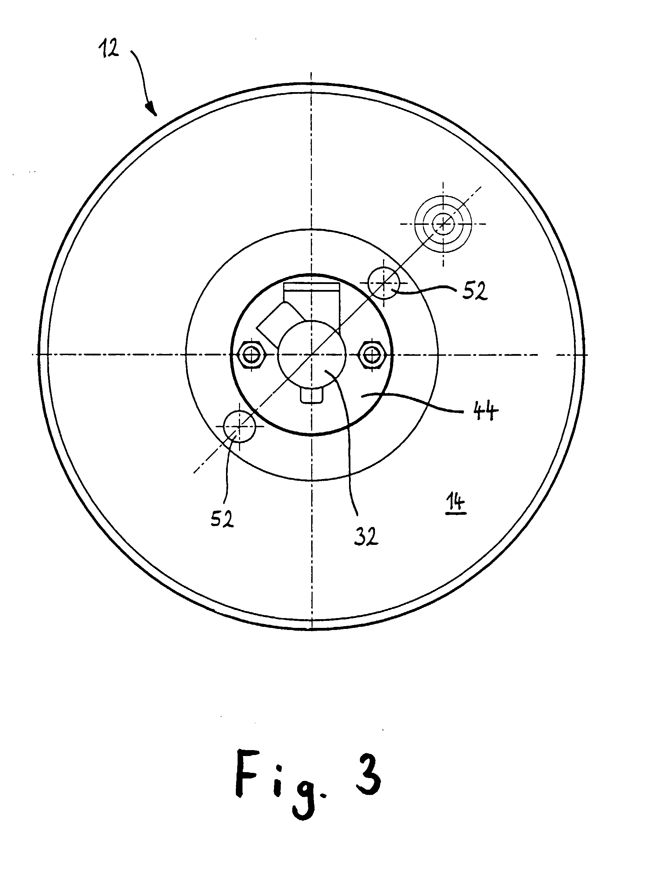

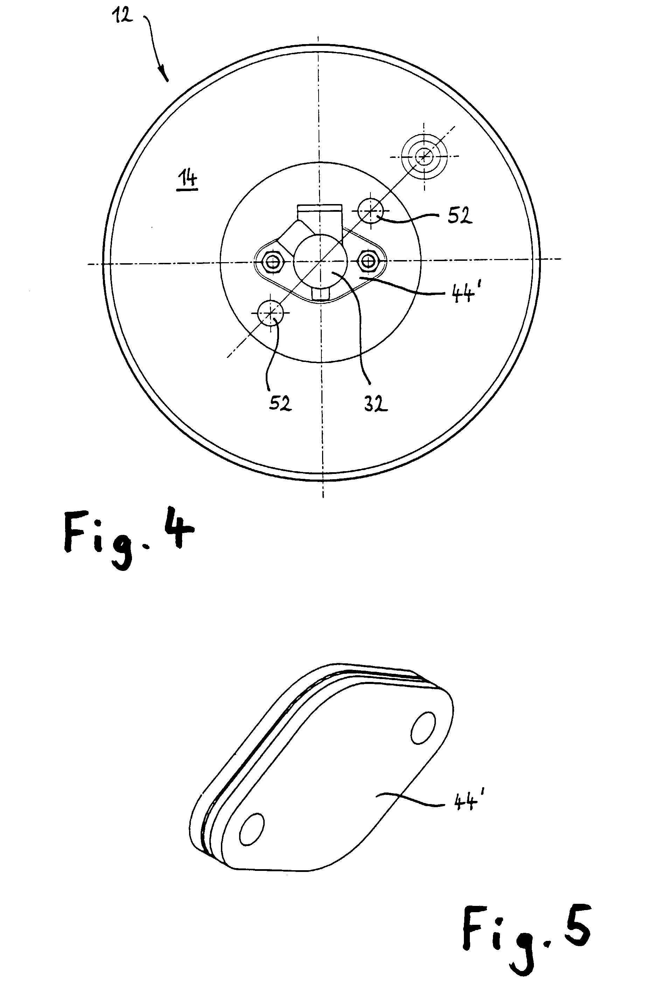

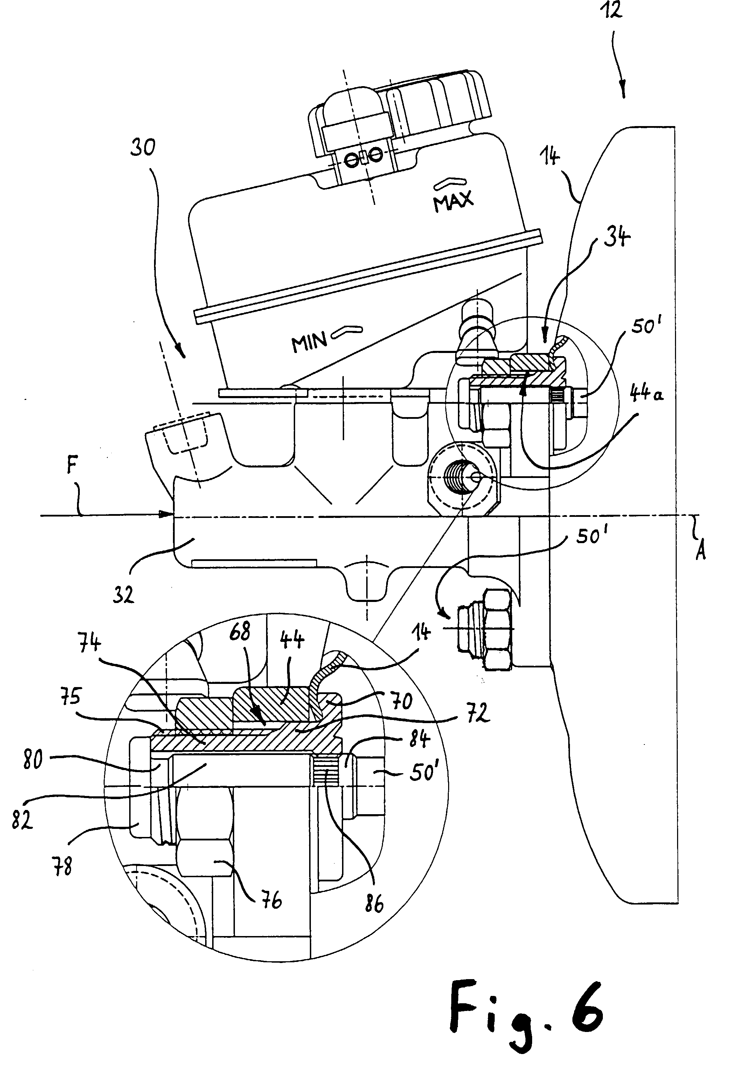

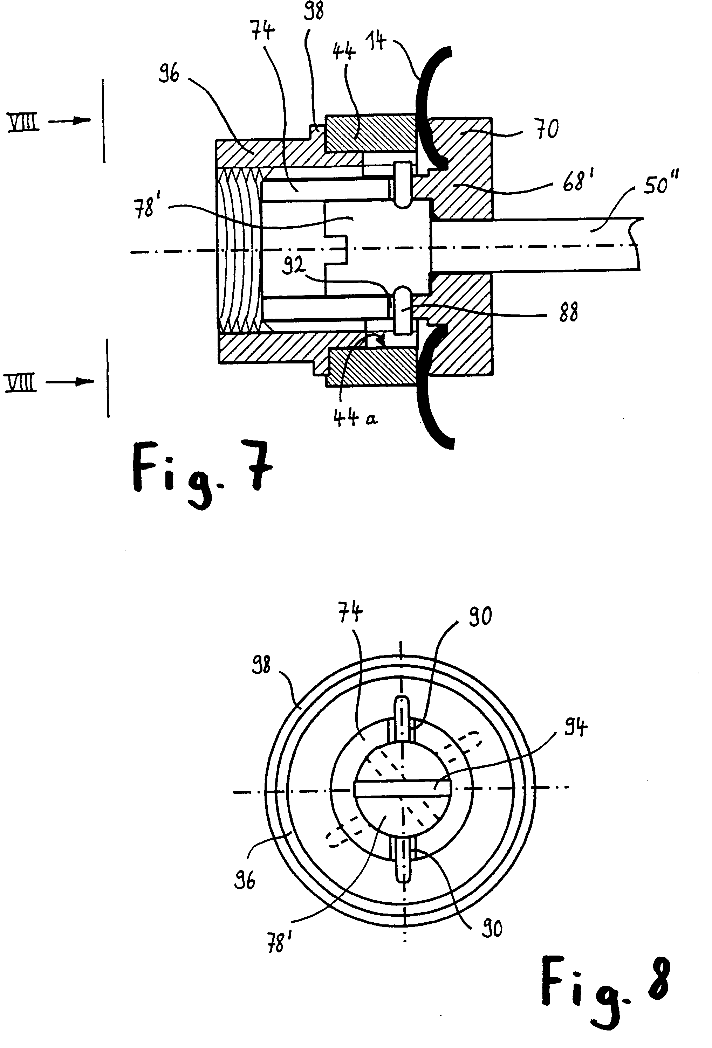

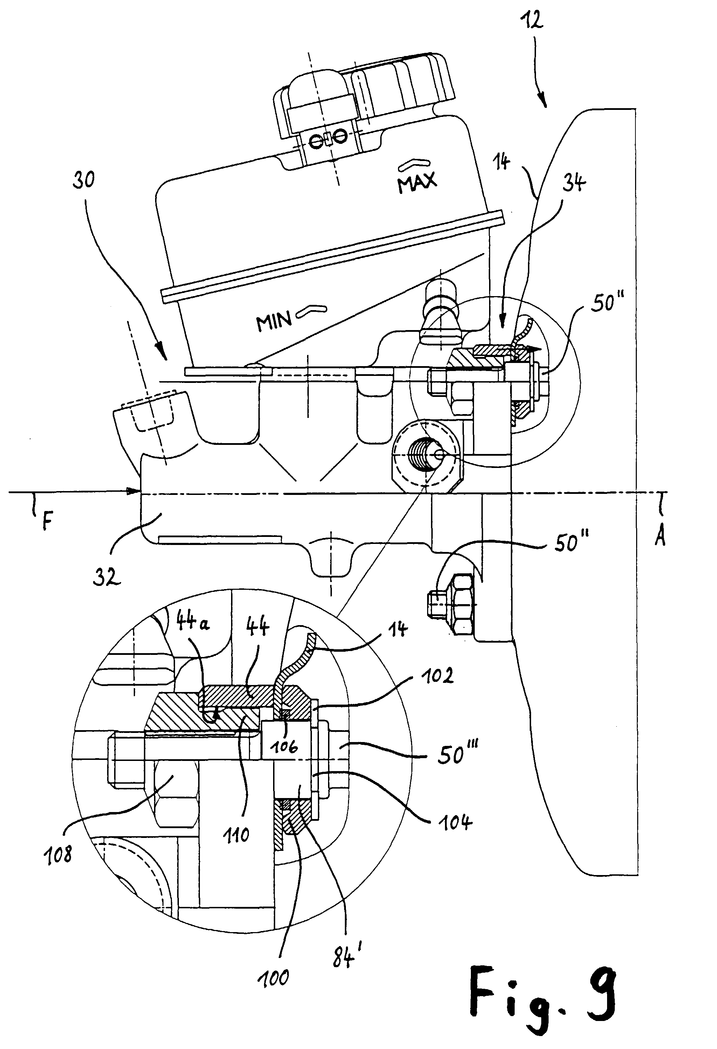

Aus Fig.3 ist ersichtlich, daß der Befestigungsflansch 44 des Hauptzylindergehäuses 30 beim ersten Ausführungsbeispiel zylindrisch ist. Das in Fig.4 dargestellte zweite Ausführungsbeispiel unterscheidet sich demgegenüber durch einen im wesentlichen rautenförmigen Befestigungsflansch 44'; die in Fig.5 vergrößert dargestellte, in Draufsicht rautenförmige Ausbildung des Befestigungsflansches 44' erlaubt es, daß die Verbindungsbolzen 50 näher an der Achse A angeordnet werden können als bei dem ersten Ausführungsbeispiel mit seinem kreiszylindrischen Befestigungsflansch 44.

Die in den Figuren 6 bis 9 gezeigten weiteren Ausführungsbeispiele der Bremskraftverstärker/Hauptzylinder-Einheit unterscheiden sich von den zwei bisher beschriebenen Ausführungsbeispielen zunächst dadurch, daß die Halterung 34 abweichend ausgebildet ist und daß insbesondere kein stutzenförmiger Abschnitt 46 des Bremskraftverstärkergehäuses 12 vorhanden ist, der den Befestigungsflansch 44 des Hauptzylindergehäuses 32 umgibt.

Bei dem in Figur 6 dargestellten dritten Ausführungsbeispiel weist die Halterung 34 des Hauptzylindergehäuses 32 eine der Anzahl an Verbindungsbolzen 50 entsprechende Anzahl hülsenförmiger Befestigungsteile 68 auf. Jedes der im Querschnitt kreisförmigen, hohlzylindrischen Befestigungsteile 68 ist an seinem in Figur 6 rechten Ende mit einer radial nach außen vorspringenden, umlaufenden Schulter 70 versehen und hat einen sich axial daran anschließenden Flanschaufnahmeabschnitt 72, an den wiederum sich axial ein Gewindeabschnitt 74 mit einem Außengewinde 75 anschließt, der einen gegenüber dem Flanschaufnahmeabschnitt 72 verringerten Außendurchmesser aufweist. Jedes Befestigungsteil 68 erstreckt sich aus dem Bremkraftverstäkergehäuse 12 durch eine passende Öffnung in der Gehäusewand 14 nach außen und durchsetzt den mit seiner Bohrung 44a bzw. seinen Bohrungen 44a passend auf dem Flanschaufnahmeabschnitt 72 des Befestigungsteils 68 aufgenommenen Befestigungsflansch 44 des Hauptzylindergehäuses 32 derart, daß ein Teil des Gewindeabschnitts 74 aus dem Befestigungsflansch 44 herausragt, um darauf eine Mutter 76 aufschrauben zu können, die den Befestigungsflansch 44 mit dem hülsenförmigen Befestigungsteil 68 verspannt (siehe Figur 6). Wie ebenfalls aus Figur 6 hervorgeht, wird dabei der Rand der passenden Öffnung in der Gehäusewand 14, durch die sich jedes Befestigungsteil 68 erstreckt, zwischen der dem Bremskraftverstärkergehäuse 12 zugewandten Stirnfläche des Befestigungsflansches 44 und der entsprechenden Stirnfläche der Schulter 70 des Befestigungsteils 68 eingeklemmt. Im in Figur 6 gezeigten Ausführungsbeispiel ist dieser Rand mit der Schulter 70 luftdicht verstemmt, alternativ kann jedoch auch eine Dichtung zwischen dem Rand der passenden Öffnung und der Schulter 70 angeordnet sein, die im verspannten Zustand an dieser Stelle ebenfalls für einen luftdichten Abschluß sorgt.

Durch jedes Befestigungsteil 68 erstreckt sich ein gegenüber den zuvor beschriebenen Ausführungsbeispielen etwas abgewandelter und daher mit 50' bezeichneter Verbindungsbolzen. Der Verbindungsbolzen 50' hat an seinem in Figur 6 linken Ende einen Kopf 78, mit dem er sich an der ihm zugewandten Stirnfläche des Befestigungsteils 68 abstützen kann, einen sich axial daran anschließenden, nutförmigen Abschnitt 80 geringeren Duchmessers gefolgt von einem Axialabschnitt 82 mit etwas vergrößertem Durchmesser, an den sich ein Befestigungsabschnitt 84 anschließt, dessen Außendurchmesser ungefähr dem des nutförmigen Abschnitts 80 entspricht. Der weitere axiale Verlauf des Verbindungsbolzens 50' kann dem des Verbindungsbolzens 50 entsprechen, der im Zusammenhang mit den zuvor beschriebenen Ausführungsbeispielen erläutert worden ist.

Die Montage des Verbindungsbolzens 50' verläuft wie folgt: Zunächst wird das hülsenförmige Befestigungsteil 68 in die passende Öffnung der Gehäusewand 14 des Bremskraftverstärkergehäuses 12 von innen her eingesetzt. Anschließend wird der Rand der Öffnung in der Gehäusewand 14 mit der Schulter 70 des Befestigungsteils 68 luftdicht verstemmt. Sodann wird der Verbindungsbolzen 50' von außen in das hülsenförmige Befestigungsteil 68 gesteckt, bis sein Kopf 78 am Befestigungsteil 68 anschlägt. Die Anlage des Kopfes 78 am Befestigungsteil 68 sorgt für eine definierte Stellung des Verbindungsbolzens 50' zum Befestigungsteil 68. Zur Fixierung dieser definierten Stellung wird anschließend der Kopf 78 mittels einer Haltevorrichtung festgehalten und es wird auf der im Bremskraftverstärkergehäuse 12 angeordneten Stirnfläche des Befestigungsteils 68 bei 69 mittels eines messerartigen Werkzeugs ein Verstemmvorgang durchgeführt, der einen Teil des Materials des Befestigungsteils 68 radial nach innen in Richtung auf den Befestigungsabschnitt 84 des Verbindungsbolzens 50' verformt. Das plastisch verformte Material dringt in eine auf dem Befestigungsabschnitt 84 ausgebildete Rändelung 86 ein, so daß eine luftdichte, verdreh- und verschiebegesicherte Verbindung zwischen dem Befestigungsteil 68 und dem Verbindungsbolzen 50' hergestellt ist. Der Verschiebewiderstand der zuvor erläuterten, durch Verstemmen erzeugten Verbindung zwischen dem Befestigungsteil 68 und dem Verbindungsbolzen 50' bestimmt den Wert der vorher festgelegten Druckkraft, deren Überschreiten dann zu einer Lösung der zuvor genannten Verbindung führt und eine Verschiebung des Hauptzylinders in das Bremskraftverstärkergehäuse 12 hinein ermöglicht.

In den Figuren 7 und 8 ist ein gegenüber dem dritten Ausführungsbeispiel etwas abgewandeltes viertes Ausführungsbeispiel dargestellt, wobei in den Figuren 7 und 8 nur noch die in diesem Zusammenhang relevanten Bauteile der Bremskraftverstärker/ Hauptzylinder-Einheit gezeigt sind. Bei dem vierten Ausführungsbeispiel wird die Verbindung zwischen dem hier mit 68' bezeichneten hülsenförmigen Befestigungsteil und einem abermals abgewandeltem, mit 50'' bezeichneten Verbindungsbolzen nicht mehr durch einen Verstemmvorgang erreicht, sondern durch einen Scherstift 88, der das Befestigungsteil 68' und den Kopf 78' des Verbindungsbolzens 50'' radial durchsetzt. Zum Einführen des Verbindungsbolzens 50'' mit seinem Scherstift 88 in das Befestigungsteil 68' weist dieses zwei Axialschlitze 90 auf, die am inneren Ende ihre Fortsetzung in zwei sich im Uhrzeigersinn und in Umfangsrichtung erstreckenden Schlitzen 92 finden, so daß der eingeführte Verbindungsbolzen 50'' mit seinem Scherstift 88 durch eine Drehung nach Art einer Bajonettverbindung in dem hülsenförmigen Befestigungsteil 68' verriegelt werden kann. Zum leichteren Verdrehen des Verbindungsbolzens 50'' in die Verriegelungsstellung, die in Figur 8 mit gestrichelten Linien dargestellt ist, weist der Kopf 78' an seinem freien Ende einen Querschlitz 94 auf, in den beispielsweise die Klinge eines Schraubenziehers eingreifen kann.

Im Unterschied zum dritten Ausführungsbeispiel weist das hülsenförmige Befestigungsteil 68' beim vierten Ausführungsbeispiel keinen Flanschaufnahmeabschnitt auf. Dieser ist stattdessen am in Figur 7 rechten Ende einer Gewindehülse 96 ausgebildet, die auf das Außengewinde 75 des Befestigungsteils 68' aufschraubbar ist und letzteres mit dem Befestigungsflansch 44 verspannt. Als Anschlag ist auf der Gewindehülse 96 eine hier einstückig ausgebildete, radial nach außen vorstehende und umlaufende Schulter 98 ausgebildet. Bei dem vierten Ausführungsbeispiel wird demnach der Wert der vorher festgelegten Druckkraft, ab deren Überschreiten eine Verschiebung des Hauptzylinders in das Bremskraftverstärkergehäuse hinein möglich sein soll, durch den Scherstift 88 bestimmt, dessen Enden bei Überschreiten einer zuvor definierten Axialkraft abscheren und damit eine Verschiebung des Hauptzylindergehäuses 32 relativ zu dem bzw. den Verbindungsbolzen 50'' ermöglichen.

Das in Figur 9 gezeigte fünfte Ausführungsbeispiel hat kein hülsenförmiges Befestigungsteil 68 oder 68'. Stattdessen ist auf einem Befestigungsabschnitt 84' eines Verbindungsbolzens 50''' ein zur Axialkraftübertragung dienender Übertragungsring 100 angeordnet, der mit seiner in Figur 9 linken Stirnfläche an der Innenseite der Gehäusewand 14 des Bremskraftverstärkergehäuses 12 anliegt und der sich mit seiner gegenüberliegenden, rechten Stirnfläche an einem Federring 102 abstützt, der in einer auf dem Befestigungsabschnitt 84' ausgebildeten Ringnut 104 gegen eine Axialverschiebung gesichert sitzt. Mit 106 ist eine Dichtung bezeichnet. Der Verbindungsbolzen 50''' weist an seinem in Figur 9 linken Ende einen mit einem Außengewinde versehenen Endabschnitt auf, auf den eine Schraubmutter 108 aufschraubbar ist, die einen Flanschaufnahmeabschnitt 110 aufweist und die im aufgeschraubten Zustand den Befestigungsflansch 44 mit dem Übertragungsring 100 verspannt.

Bei dem fünften Ausführungsbeispiel wird demnach der Wert der vorher festgelegten Druckkraft, ab deren Überschreiten eine Verschiebung des Hauptzylindergehäuses 32 in das Bremskraftverstärkergehäuse 12 hinein möglich wird, durch die zum Drükken des Federrings 102 aus der Ringnut 104 erforderliche Axialkraft bestimmt.

Im Gegensatz zu den ersten beiden Ausführungsbeispielen wird bei den zuletzt beschriebenen drei Ausführungsbeispielen die Gehäusewand 14 dann, wenn eine Verschiebung des Hauptzylindergehäuses 32 relativ zu dem oder den Verbindungsbolzen 50 stattfindet, mit in das Bremskraftverstärkergehäuse 12 hineingedrückt. Dies ist jedoch kein Nachteil, da die sich einbeulende Gehäusewand 14 so in durchaus erwünschter Weise Energie abbauen kann, die sonst weitergeleitet worden wäre.

Die zuletzt beschriebenen drei Ausführungsbeispiele haben darüberhinaus den Vorteil einer einfachern Demontierbarkeit des Hauptzylinders, da letzterer vom Bremskraftverstärker getrennt werden kann, ohne den Bremskraftverstärker von der Karosseriewand, an der er befestigt ist, abbauen zu müssen und ohne den oder die Verbindungsbolzen herausnehmen zu müssen.

## Patentansprüche

1. Bremskraftverstärker/Hauptzylinder-Einheit für eine Fahrzeugbremsanlage, mit einem Bremskraftverstärker (10), der ein insbesondere mindestens zweiteiliges Gehäuse (12) mit zwei einander gegenüberliegenden, äußeren Gehäusewänden (14, 16), denen Befestigungselemente für eine Karosseriewand bzw. für einen sich längs einer Achse (A) erstreckenden Hauptzylinder (30) zugeordnet sind, und zumindest eine bewegliche Wand (20) aufweist, die den Gehäuseinnenraum in zwei Kammern (22, 24) unterteilt und eine Kraft über ein Ausgangsglied auf den Hauptzylinder (30) überträgt, wenn in Abhängigkeit von einer an einem Eingangsglied (27) wirksamen Kraft zwischen den Kammern (22, 24) ein Druckunterschied herrscht, wobei die Befestigungselemente an den Enden mindestens eines Verbindungsbolzens (50, 50', 50'', 50''') angeordnet sind, der sich von einer äußeren Gehäusewand (14) durch die bewegliche Wand (20) hindurch zur gegenüberliegenden, äußeren Gehäusewand (16) erstreckt und gegen die bewegliche Wand (20) abgedichtet ist, und wobei der Hauptzylinder (30) ein Gehäuse (32) mit einer Halterung (34) hat, die von dem oder mehreren Verbindungsbolzen (50, 50', 50'', 50''') durchsetzt ist, dadurch gekennzeichnet, daß das Hauptzylindergehäuse (32) mit seiner Halterung (34) sich nach Überschreiten einer vorher festgelegten, in Richtung der Achse (A) auf es wirkenden Druckkraft relativ zu dem oder den Verbindungsbolzen (50, 50', 50'', 50''') in das Bremskraftverstärkergehäuse (12) hinein verschiebt.

2. Bremskraftverstärker/Hauptzylinder-Einheit nach Anspruch 1, dadurch gekennzeichnet, daß die Einheit zur Befestigung an einer Karosseriewand eines Fahrzeugs vorgesehen ist, und daß die vorher festgelegte Druckkraft, nach deren Überschreiten sich das Hauptzylindergehäuse (32) relativ zu dem oder den Verbindungsbolzen (50, 50', 50", 50"') in das Bremskraftverstärkergehäuse (12) hinein verschiebt, kleiner ist als eine Kraft, die zur Verformung der genannten Karosseriewand nötig ist.

3. Bremskraftverstärker/Hauptzylinder-Einheit nach Anspruch 1 oder 2, dadurch gekennzeichnet, daß die Halterung (34) durch einen mit dem Hauptzylindergehäuse (32) verbundenen, radialen Flansch (36) gebildet ist, der innerhalb des Bremskraftverstärkergehäuses (12) angeordnet ist.

4. Bremskraftverstärker/Hauptzylinder-Einheit nach Anspruch 3, dadurch gekennzeichnet, daß der Flansch (36) innen an der dem Hauptzylinder (30) benachbarten äußeren Gehäusewand (14) des Bremskraftverstärkergehäuses (12) anliegt.

5. Bremskraftverstärker/Hauptzylinder-Einheit nach einem der vorhergehenden Ansprüche, dadurch gekennzeichnet, daß eine äußere Gehäusewand (14) des Bremskraftverstärkergehäuses (12) einen insbesondere axial nach außen hervorragenden, stutzenförmigen Abschnitt (46) aufweist, der einen dem Bremskraftverstärkergehäuse (12) benachbarten Befestigungsflansch (44) des Hauptzylindergehäuses (32) umgibt.

6. Bremskraftverstärker/Hauptzylinder-Einheit nach Anspruch 5, dadurch gekennzeichnet, daß der Befestigungsflansch (44) des Hauptzylindergehäuses (32) in Draufsicht im wesentlichen rautenförmig ist.

7. Bremskraftverstärker/Hauptzylinder-Einheit nach Anspruch 5 oder 6, dadurch gekennzeichnet, daß der stutzenförmige Abschnitt (46) gegenüber dem Befestigungsflansch (44) des Hauptzylindergehäuses (32) abgedichtet ist.

8. Bremskraftverstärker/Hauptzylinder-Einheit nach einem der vorhergehenden Ansprüche, dadurch gekennzeichnet, daß der Wert der zuvor festgelegten Druckkraft durch eine im Bremskraftverstärkergehäuse (12) angeordnete und die bewegliche Wand (20) in ihre Ausgangslage vorspannende Rückstellfeder (45) bestimmt wird, deren eines Ende sich am Hauptzylindergehäuse (32) oder dessen Halterung (34) abstützt.

9. Bremskraftverstärker/Hauptzylinder-Einheit nach einem der vorhergehenden Ansprüche, dadurch gekennzeichnet, daß der oder die Verbindungsbolzen (50) in dem Längsabschnitt, mit dem sie die Halterung (34) durchsetzen, einen vergrößerten Durchmesser aufweisen.

10. Bremskraftverstärker/Hauptzylinder-Einheit nach Anspruch 1 oder 2, dadurch gekennzeichnet, daß die Halterung (34) zumindest ein hülsenförmiges Befestigungsteil (68, 68') aufweist, welches die dem Hauptzylinder zugewandte, äußere Gehäusewand (14) des Bremskraftverstärkergehäuses (12) durchsetzt und mit einer radial nach außen vorspringenden Schulter (70) versehen ist, an der sich die Gehäusewand (14) abstützt.

11. Bremskraftverstärker/Hauptzylinder-Einheit nach Anspruch 10, dadurch gekennzeichnet, daß die Gehäusewand (14) mit der Schulter (70) des Befestigungsteils (68, 68') verstemmt ist.

12. Bremskraftverstärker/Hauptzylinder-Einheit nach Anspruch 10 oder 11, dadurch gekennzeichnet, daß jedes hülsenförmige Befestigungsteil (68, 68') von einem Verbindungsbolzen (50', 50'') durchsetzt ist.

13. Bremskraftverstärker/Hauptzylinder-Einheit nach Anspruch 12, dadurch gekennzeichnet, daß das hülsenförmige Befestigungsteil (68, 68') einen Gewindeabschnitt (74) aufweist, der mit einem Außengewinde (75) versehen ist und durch einen Befestigungsflansch (44) des Hauptzylindergehäuses (32) hindurchragt.

14. Bremskraftverstärker/Hauptzylinder-Einheit nach Anspruch 13, dadurch gekennzeichnet, daß ein Scherstift (88) das hülsenförmige Befestigungsteil (68') und den sich dadurch erstreckenden Verbindungsbolzen (50'') radial durchsetzt, so daß der Wert der vorher festgelegten Druckkraft durch den Scherstift (88) bestimmt wird.

15. Bremskraftverstärker/Hauptzylinder-Einheit nach Anspruch 14, dadurch gekennzeichnet, daß eine Gewindehülse (96) den Befestigungsflansch (44) mit dem hülsenförmigen Befestigungsteil (68') verspannt, wobei die Gewindehülse (96) einen Flanschaufnahmeabschnitt und eine radial nach außen vorstehende, vorzugsweise umlaufende Anschlagschulter (98) aufweist.

16. Bremskraftverstärker/Hauptzylinder-Einheit nach Anspruch 13, dadurch gekennzeichnet, daß der sich durch das hülsenförmige Befestigungsteil (68) erstreckende Verbindungsbolzen (50') einen mit einer Rändelung (86) versehenen Befestigungsabschnitt (84) aufweist, in den ein entsprechender Abschnitt des hülsenförmigen Befestigungsteils (68) verstemmt ist, so daß der Wert der vorher festgelegten Druckkraft durch die zuvor genannte Verstemmverbindung bestimmt wird.

17. Bremskraftverstärker/Hauptzylinder-Einheit nach Anspruch 16, dadurch gekennzeichnet, daß eine Mutter (76) den Befestigungsflansch (44) mit dem hülsenförmigen Befestigungsteil (68) verspannt, wobei das hülsenförmige Befestigungsteil (68) einen sich axial an die Schulter (70) anschließenden Flanschaufnahmeabschnitt (72) aufweist, der einen größeren Durchmesser als der sich daran anschließende Gewindeabschnitt (74) hat.

18. Bremskraftverstärker/Hauptzylinder-Einheit nach Anspruch 1 oder 2, dadurch gekennzeichnet, daß die Halterung (34) zumindest einen an der Innenseite der dem Hauptzylinder zugewandten äußeren Gehäusewand (14) des Bremskraftverstärkergehäuses (12) anliegenden Übertragungsring (100) aufweist, der auf einem Verbindungsbolzen (50''') angeordnet ist und sich auf seiner von der Gehäusewand (14) abgewandten Seite gegen einen Federring (102) abstützt, der in einer auf dem Verbindungsbolzen (50''') vorhandenen Ringnut (104) sitzt, so daß der Wert der vorher festgelegten Druckkraft durch die zum Drücken des Federrings (102) aus der Ringnut (104) erforderliche Axialkraft bestimmt wird.

19. Bremskraftverstärker/Hauptzylinder-Einheit nach Anspruch 18, dadurch gekennzeichnet, daß eine Schraubmutter (108) den Befestigungsflansch (44) mit dem Übertragungsring (100) verspannt, wobei die Schraubmutter (108) einen Flanschaufnahmeabschnitt (110) aufweist.

20. Bremskraftverstärker/Hauptzylinder-Einheit nach einem der vorhergehenden Ansprüche, dadurch gekennzeichnet, daß der oder jeder Verbindungsbolzen (50, 50', 50'', 50''') hohl ist.

21. Bremskraftverstärker/Hauptzylinder-Einheit nach einem der vorhergehenden Ansprüche, dadurch gekennzeichnet, daß der bzw. jeder Verbindungsbolzen (50, 50', 50'', 50''') bezüglich der zur beweglichen Wand (20) normalen Mittelachse des Gehäuses (12) seitlich versetzt angeordnet ist.

22. Bremskraftverstärker/Hauptzylinder-Einheit nach Anspruch 21, dadurch gekennzeichnet, daß mehrere Verbindungsbolzen (50, 50', 50'', 50''') in gleichen Abständen voneinander um die Mittelachse des Gehäuses (12) verteilt angeordnet sind.

23. Bremskraftverstärker/Hauptzylinder-Einheit nach Anspruch 22, dadurch gekennzeichnet, daß insgesamt zwei Verbindungsbolzen (50, 50', 50'', 50''') vorhanden und bezüglich der Mittelachse des Gehäuses (12) einander diametral gegenüber angeordnet sind.

24. Bremskraftverstärker/Hauptzylinder-Einheit nach einem der vorhergehenden Ansprüche, dadurch gekennzeichnet, daß mindestens ein Ende (56) des bzw. jedes Verbindungsbolzens (50, 50', 50'', 50''') durch die entsprechende äußere Gehäusewand (16) nach außen ragt.

25. Bremskraftverstärker/Hauptzylinder-Einheit nach Anspruch 24, dadurch gekennzeichnet, daß die nach außen ragenden Enden (56) mit je einem Gewinde (58) versehen sind.

26. Bremskraftverstärker/Hauptzylinder-Einheit nach einem der vorhergehenden Ansprüche, dadurch gekennzeichnet, daß der bzw. jeder Verbindungsbolzen (50, 50', 50'', 50''') auf zumindest einem seiner Endbereiche eine radial nach außen vorspringende, vorzugsweise umlaufende Schulter (62, 64) aufweist, die eine Einwärtsbewegung der zugeordneten äußeren Gehäusewand (14, 16) begrenzt.

27. Bremskraftverstärker/Hauptzylinder-Einheit nach einem der vorhergehenden Ansprüche, dadurch gekennzeichnet, daß in dem Kraftübertragungsweg von dem Ausgangsglied des Bremskraftverstärkers (10) zum Hauptzylinder (30) eine Sollbruchstelle vorhanden ist, die bei einer längs der Achse (A) wirkenden Druckkraft bricht, bevor sich die Karosseriewand des Fahrzeugs verformt.

28. Bremskraftverstärker/Hauptzylinder-Einheit nach einem der Ansprüche 1 bis 26, dadurch gekennzeichnet, daß der Hydraulikkreis des Hauptzylinders (30) eine Überlastsicherung enthält, die eine durch die Verschiebung des Hauptzylindergehäuses (32) in das Bremskraftverstärkergehäuse (12) mögliche, übermäßige Hydraulikdruckerhöhung abbaut bzw. begrenzt.

## Claims

1. Brake booster/master cylinder unit for a vehicle brake system, having a brake booster (10) which comprises an, in particular, at least two-part housing (12) having two opposing outer housing walls (14, 16), with which are associated fastening elements for a body wall and for a master cylinder (30) extending along an axis (A), and at least one movable wall (20), which divides the housing interior into two chambers (22, 24) and transmits a force via an output element to the master cylinder (30) when in dependence upon a force effective at an input element (27) there is a pressure difference between the chambers (22, 24), wherein the fastening elements are disposed on the ends of at least one connecting pin (50, 50', 50", 50'''), which extends from an outer housing wall (14) through the movable wall (20) to the opposing outer housing wall (16) and is sealed against the movable wall (20), and wherein the master cylinder (30) has a housing (32) with a mounting (34), which is penetrated by the connecting pin or a plurality of connecting pins (50, 50', 50", 50"') ,
characterized in that the master cylinder housing (32) with its mounting (34), after a previously defined force of pressure acting upon the housing in the direction of the axis (A) is exceeded, is displaced relative to the connecting pin or pins (50, 50', 50", 50"') into the brake booster housing (12).

2. Brake booster/master cylinder unit according to claim 1,
characterized in that the unit is intended for fastening to a body wall of a vehicle, and that the previously defined force of pressure, after the exceeding of which the master cylinder housing (32) is displaced relative to the connecting pin or pins (50, 50', 50", 50"') into the brake booster housing (12), is lower than a force required to deform said body wall.

3. Brake booster/master cylinder unit according to claim 1 or 2,
characterized in that the mounting (34) is formed by a radial flange (36), which is connected to the master cylinder housing (32) and disposed inside the brake booster housing (12).

4. Brake booster/master cylinder unit according to claim 3,
characterized in that the flange (36) rests against the inside of the outer housing wall (14), adjacent to the master cylinder (30), of the brake booster housing (12).

5. Brake booster/master cylinder unit according to one of the preceding claims,
characterized in that an outer housing wall (14) of the brake booster housing (12) comprises an, in particular, axially outward projecting, connection-piece-like portion (46) which surrounds a fastening flange (44), adjacent to the brake booster housing (12), of the master cylinder housing (32).

6. Brake booster/master cylinder unit according to claim 5,
characterized in that the fastening flange (44) of the master cylinder housing (32), in plan view, is substantially diamond-shaped.

7. Brake booster/master cylinder unit according to claim 5 or 6,
characterized in that the connection-piece-shaped portion (46) is sealed off relative to the fastening flange (44) of the master cylinder housing (32).

8. Brake booster/master cylinder unit according to one of the preceding claims,
characterized in that the value of the previously defined force of pressure is determined by a return spring (45), which is disposed in the brake booster housing (12) and preloads the movable wall (20) into its starting position and is supported by one end against the master cylinder housing (32) or its mounting (34).

9. Brake booster/master cylinder unit according to one of the preceding claims,
characterized in that the connecting pin or pins (50) have an enlarged diameter in the longitudinal portion, with which they penetrate the mounting (34).

10. Brake booster/master cylinder unit according to claim 1 or 2,
characterized in that the mounting (34) comprises at least one sleeve-shaped fastening part (68, 68'), which penetrates the outer housing wall (14), directed towards the master cylinder, of the brake booster housing (12) and is provided with a radially outward projecting shoulder (70), against which the housing wall (14) is supported.

11. Brake booster/master cylinder unit according to claim 10,
characterized in that the housing wall (14) is caulked to the shoulder (70) of the fastening part (68, 68').

12. Brake booster/master cylinder unit according to claim 10 or 11,
characterized in that each sleeve-shaped fastening part (68, 68') is penetrated by a connecting pin (50', 50").

13. Brake booster/master cylinder unit according to claim 12,
characterized in that the sleeve-shaped fastening part (68, 68') comprises a threaded portion (74), which is provided with an external thread (75) and projects through a fastening flange (44) of the master cylinder housing (32).

14. Brake booster/master cylinder unit according to claim 13,
characterized in that a shearing pin (88) radially penetrates the sleeve-shaped fastening part (68') and the connecting pin (50") extending through it, so that the value of the previously defined force of pressure is determined by the shearing pin (88).

15. Brake booster/master cylinder unit according to claim 14,
characterized in that a threaded sleeve (96) braces the fastening flange (44) with the sleeve-shaped fastening part (68'), wherein the threaded sleeve (96) comprises a flange-receiving portion and a radially outward projecting, preferably circumferential stop shoulder (98).

16. Brake booster/master cylinder unit according to claim 13,
characterized in that the connecting pin (50') extending through the sleeve-shaped fastening part (68) comprises a fastening portion (84), which is provided with a knurl (86) and into which a corresponding portion of the sleeve-shaped fastening part (68) is caulked, so that the value of the previously defined force of pressure is determined by the previously described caulked joint.

17. Brake booster/master cylinder unit according to claim 16,
characterized in that a nut (76) braces the fastening flange (44) with the sleeve-shaped fastening part (68), wherein the sleeve-shaped fastening part (68) comprises a flange-receiving portion (72), which axially adjoins the shoulder (70) and has a larger diameter than the adjoining threaded portion (74).

18. Brake booster/master cylinder unit according to claim 1 or 2,
characterized in that the mounting (34) comprises at least one transmission ring (100), which lies against the inside of the outer housing wall (14), directed towards the master cylinder, of the brake booster housing (12) and is disposed on a connecting pin (50''') and supported at its side remote from the housing wall (14) against a spring washer (102), which is seated in an annular groove (104) provided on the connecting pin (50"'), so that the value of the previously defined force of pressure is determined by the axial force required to press the spring washer (102) out of the annular groove (104).

19. Brake booster/master cylinder unit according to claim 18,
characterized in that a screw nut (108) braces the fastening flange (44) with the transmission ring (100), wherein the screw nut (108) comprises a flange-receiving portion (110).

20. Brake booster/master cylinder unit according to one of the preceding claims,
characterized in that the or each connecting pin (50, 50', 50", 50"') is hollow.

21. Brake booster/master cylinder unit according to one of the preceding claims,
characterized in that the or each connecting pin (50, 50', 50", 50"') is arranged laterally offset relative to the centre line of the housing (12) perpendicular to the movable wall (20).

22. Brake booster/master cylinder unit according to claim 21,
characterized in that a plurality of connecting pins (50, 50', 50", 50"') are arranged so as to be distributed equidistantly from one another around the centre line of the housing (12).

23. Brake booster/master cylinder unit according to claim 22,
characterized in that altogether two connecting pins (50, 50', 50", 50"') are provided and disposed diametrically opposite one another relative to the centre line of the housing (12).

24. Brake booster/master cylinder unit according to one of the preceding claims,
characterized in that at least one end (56) of the or each connecting pin (50, 50', 50", 50"') projects outwards through the corresponding outer housing wall (16).

25. Brake booster/master cylinder unit according to claim 24,
characterized in that the outward projecting ends (56) are each provided with a thread (58).

26. Brake booster/master cylinder unit according to one of the preceding claims,
characterized in that the or each connecting pin (50, 50', 50", 50"') at at least one of its end regions comprises a radially outward projecting, preferably circumferential shoulder (62, 64), which delimits an inward movement of the associated outer housing wall (14, 16).

27. Brake booster/master cylinder unit according to one of the preceding claims,
characterized in that provided in the power transmission path from the output element of the brake booster (10) to the master cylinder (30) is a rupture joint which, in the event of a force of pressure acting along the axis (A), ruptures before the body wall of the vehicle deforms.

28. Brake booster/master cylinder unit according to one of claims 1 to 26,
characterized in that the hydraulic circuit of the master cylinder (30) comprises an overload protection device, which reduces or delimits an excessive hydraulic pressure increase made possible by the displacement of the master cylinder housing (32) into the brake booster housing (12).

## Revendications

1. Unité servofrein / maître cylindre pour une installation de freinage de véhicule, comprenant un servofrein (10) qui présente un boîtier (12) en particulier au moins en deux parties pourvu de deux parois de boîtier (14, 16) extérieures se faisant face auxquelles sont associés des éléments de fixation pour un élément de carrosserie, respectivement pour un maître cylindre de frein (30) s'étendant suivant un axe (A), et au moins une paroi mobile (20) qui subdivise le volume intérieur du boîtier en deux chambres (22, 24) et transmet une force au maître cylindre (30) par l'intermédiaire d'un élément de transmission lorsqu'en fonction d'une force active sur un élément d'entrée de force (27), une différence de pression règne entre les deux chambres (22, 24), les éléments de fixation étant disposés aux extrémités d'au moins un boulon de liaison (50, 50', 50", 50"') qui s'étend d'une paroi de boîtier extérieure (14) à travers la paroi mobile (20) jusqu'à la paroi de boîtier extérieure opposée (16) et traverse de façon étanche la paroi mobile (20) et le maître cylindre (30) possédant un boîtier (32) pourvu d'une fixation (34) qui est traversée par le ou les plusieurs boulon(s) de liaison (50, 50', 50", 50"') , caractérisé en ce que le boîtier de maître cylindre (32) coulisse, après dépassement d'une force de pression déterminée à l'avance agissant sur lui dans la direction de l'axe (A), avec sa fixation (34) par rapport au ou aux boulon(s) de liaison (50, 50', 50", 50'''), vers l'intérieur du boîtier de servofrein (12).

2. Unité servofrein / maître cylindre selon la revendication 1, caractérisée en ce que l'unité est prévue pour la fixation à un élément de carrosserie d'un véhicule et en ce que la force de pression déterminée à l'avance, après le dépassement de laquelle le boîtier de maître cylindre (32) coulisse par rapport au ou aux boulon(s) de liaison (50, 50', 50", 50"') vers l'intérieur du boîtier de servofrein (12), est plus petite que la force qui est nécessaire pour déformer ledit élément de carrosserie.

3. Unité servofrein / maître cylindre selon la revendication 1 ou 2, caractérisée en ce que la fixation (34) est formée par une bride radiale (36) liée au boîtier de maître cylindre (32), qui est disposée à l'intérieur du boîtier de servofrein (12).

4. Unité servofrein / maître cylindre selon la revendication 3, caractérisée en ce que la bride (36) s'applique intérieurement contre la paroi de boîtier (14) extérieure voisine du maître cylindre (30) du boîtier de servofrein (12).

5. Unité servofrein / maître cylindre selon l'une quelconque des revendications précédentes, caractérisée en ce qu'une paroi de boîtier extérieure (14) du boîtier de servofrein (12) présente une portion (46) faisant saillie en particulier axialement vers l'extérieur, en forme de tubulure, qui entoure un flasque de fixation (44) du boîtier de maître cylindre (32) voisin du boîtier de servofrein (12).

6. Unité servofrein / maître cylindre selon la revendication 5, caractérisée en ce que le flasque de fixation (44) du boîtier de maître cylindre (32) est principalement en forme de losange en vue de dessus.

7. Unité servofrein / maître cylindre selon la revendication 5 ou 6, caractérisée en ce qu'une étanchéité est réalisée entre la portion en forme de tubulure (46) et le flasque de fixation (44) du boîtier de maître cylindre (32).

8. Unité servofrein / maître cylindre selon l'une quelconque des revendications précédentes, caractérisée en ce que la valeur de la force de pression déterminée à l'avance est déterminée par un ressort de rappel (45) disposé dans le boîtier de servofrein (12), dont l'une des extrémités s'appuie sur le boîtier de maître cylindre (32) ou sur la fixation (34) de celui-ci, et poussant en permanence la paroi mobile (20) vers sa position initiale,

9. Unité servofrein / maître cylindre selon l'une quelconque des revendications précédentes, caractérisée en ce que le ou les boulon(s) de liaison (50) présentent un diamètre agrandi dans la portion longitudinale avec laquelle ils traversent la fixation (34).

10. Unité servofrein / maître cylindre selon la revendication 1 ou 2, caractérisée en ce que la fixation (34) présente au moins une pièce de fixation (68, 68') en forme de douille qui traverse la paroi de boîtier (14) extérieure, tournée vers le maître cylindre du boîtier de servofrein (12) et est pourvue d'un épaulement radial (70) faisant saillie vers l'extérieur sur lequel s'appuie la paroi de boîtier (14).

11. Unité servofrein / maître cylindre selon la revendication 10, caractérisée en ce que la paroi de boîtier (14) est matée avec l'épaulement (70) de la pièce de fixation (68, 68').

12. Unité servofrein / maître cylindre selon la revendication 10 ou 11, caractérisée en ce que chaque pièce de fixation (68,68') en forme de douille est traversée par un boulon de liaison (50', 50'').

13. Unité servofrein / maître cylindre selon la revendication 12, caractérisée en ce que la pièce de fixation en forme de douille (68, 68') présente une portion filetée (74) qui est pourvue d'un filetage extérieur (75) et qui traverse en le dépassant un flasque de fixation (44) du boîtier de maître cylindre (32).

14. Unité servofrein / maître cylindre selon la revendication 13, caractérisée en ce qu'une goupille de cisaillement (88) traverse radialement la pièce de fixation en forme de douille (68') et le boulon de liaison (50") s'étendant à travers celle-ci, de telle façon que la valeur de la force de fixation déterminée à l'avance soit déterminée par la goupille de cisaillement (88).

15. Unité servofrein / maître cylindre selon la revendication 14, caractérisée en ce qu'une douille filetée (96) serre le flasque de fixation (44) avec la pièce de fixation en forme de douille (68'), la douille filetée (96) présentant une portion de réception de flasque et un épaulement de butée (98) dépassant radialement vers l'extérieur, de préférence périphérique.

16. Unité servofrein / maître cylindre selon la revendication 13, caractérisée en ce que le boulon de liaison (50') s'étendant à travers la pièce de fixation en forme de douille (68) présente une portion de fixation (84) pourvue d'un moletage (86), dans laquelle est matée une portion correspondante de la pièce de fixation en forme de douille (68), de telle façon que la valeur de la force de pression déterminée à l'avance soit déterminée par ladite liaison par matage précitée.

17. Unité servofrein / maître cylindre selon la revendication 16, caractérisée en ce qu'un écrou (76) serre le flasque de fixation (44) avec la pièce de fixation en forme de douille (68), la pièce de fixation en forme de douille (68) présentant une portion de réception de flasque (72) de diamètre supérieur à celui de la portion filetée (74) s'y raccordant, se raccordant axialement à l'épaulement (70).

18. Unité servofrein / maître cylindre selon la revendication 1 ou 2, caractérisée en ce que la fixation (34) présente au moins une bague de transmission (100) s'appliquant contre la face intérieure de la paroi de boîtier (14) extérieure du boîtier de servofrein (12) tournée vers le maître cylindre, laquelle bague de transmission (100) est disposée sur un boulon de liaison (50''') et s'appuie par son côté opposé à la paroi de boîtier (14) contre une rondelle élastique bombée (102) qui est logée dans une gorge annulaire (104) présente sur le boulon de liaison (50''') de telle façon que la valeur de la force de pression déterminée à l'avance soit déterminée par la force axiale nécessaire pour expulser la rondelle élastique bombée (102) de la gorge annulaire (104).

19. Unité servofrein / maître cylindre selon la revendication 18, caractérisée en ce qu'un écrou taraudé (108) serre le flasque de fixation (44) avec la bague de transmission (100), l'écrou (108) présentant une portion de réception de flasque (110).

20. Unité servofrein / maître cylindre selon l'une quelconque des revendications précédentes, caractérisée en ce que le ou chaque boulon de liaison (50, 50', 50", 50"') est creux.

21. Unité servofrein / maître cylindre selon l'une quelconque des revendications précédentes, caractérisée en ce que le, respectivement chaque boulon de liaison (50, 50', 50", 50"') est disposé décalé latéralement par rapport à l'axe central du boîtier (12) normal à la paroi mobile (20).

22. Unité servofrein / maître cylindre selon la revendication 21, caractérisée en ce que plusieurs boulons de liaison (50, 50', 50", 50"') sont disposés répartis à distances égales les uns des autres autour de l'axe central du boîtier (12).

23. Unité servofrein / maître cylindre selon la revendication 22, caractérisée en ce qu'il y a en tout deux boulons de liaison (50, 50', 50", 50"') qui sont disposés diamétralement opposés par rapport à l'axe central du boîtier (12).

24. Unité servofrein / maître cylindre selon l'une quelconque des revendications précédentes, caractérisée en ce qu'au moins une extrémité (56) du, respectivement de chaque boulon de liaison (50, 50', 50", 50"') traverse et dépasse vers l'extérieur de la paroi de boîtier (16) correspondante.

25. Unité servofrein / maître cylindre selon la revendication 24, caractérisée en ce que les extrémités dépassant vers l'extérieur (56) sont pourvues chacune d'un filetage (58).

26. Unité servofrein / maître cylindre selon l'une quelconque des revendications précédentes, caractérisée en ce que le, respectivement chaque boulon(s) liaison (50, 50', 50", 50"') présente sur au moins une de ses zones d'extrémité un épaulement (62, 64) faisant saillie vers l'extérieur, de préférence périphérique, qui limite un déplacement vers l'intérieur de la paroi de boîtier (14, 16) extérieure associée.

27. Unité servofrein / maître cylindre selon l'une quelconque des revendications précédentes, caractérisée en ce qu'il y a, dans la transmission de force qui va de l'élément de transmission du servofrein (10) au maître cylindre (30) un emplacement destiné à la rupture qui se brise lorsqu'une force de pression agit selon l'axe (A) avant que l'élément de carrosserie du véhicule se déforme.

28. Unité servofrein / maître cylindre selon l'une quelconque des revendications 1 à 26, caractérisée en ce que le circuit hydraulique du maître cylindre (30) contient une sécurité de protection contre les surcharges qui réduit, respectivement limite une possible augmentation de pression hydraulique trop importante engendrée dans le boîtier de servofrein (12) par le coulissement du boîtier de maître cylindre (32).
